# EUROPEAN PATENT SPECIFICATION

(11) **EP 3 821 552 B1**
(45) Date of publication and mention of the grant of the patent: **26.03.2025**
(21) Application number: 18746899.6
(22) Date of filing: 25.07.2018
(51) Int. Cl.: H04L 1/18, H04L 25/03

(54) **DEVICE AND METHOD FOR SUPPORTING HARQ FOR WI-FI**
VORRICHTUNG UND VERFAHREN ZUR UNTERSTÜTZUNG VON HARQ FÜR WLAN
DISPOSITIF ET PROCÉDÉ DE PRISE EN CHARGE DE HARQ POUR WI-FI

(43) Date of publication of application: 19.05.2021
(73) Proprietor: HUAWEI TECHNOLOGIES CO., LTD., Shenzhen, Guangdong 518129 (CN)
(72) Inventor: EPSTEIN, Leonid, 80992 Munich (DE); TSODIK, Genadiy, 80992 Munich (DE); WEITZMAN, Avi, 80992 Munich (DE); REDLICH, Oded, 80992 Munich (DE); YU, Jian, 80992 Munich (DE); SHILO, Shimon, 80992 Munich (DE)
(74) Representative: Roth, Sebastian
(86) International application number: PCT/EP2018/070206
(87) International publication number: WO 2020/020456

(56) References cited:
- US-A1- 2008 159 537
- US-A1- 2009 046 713
- US-A1- 2017 222 761
- US-A1- 2018 076 992
- US-B1- 9 876 614
- TAIEB MOHAMED HAJ ET AL: "Enhancing secrecy of the Gaussian wiretap channel using rate compatible LDPC codes with error amplification", 2015 IEEE 14TH CANADIAN WORKSHOP ON INFORMATION THEORY (CWIT), IEEE, 6 July 2015 (2015-07-06), pages 41 - 45, XP033203838, DOI: 10.1109/CWIT.2015.7255148

## Description

### TECHNICAL FIELD

The present invention relates to Hybrid Automatic Repeat Request (HARQ) in wireless communication technologies, particularly for IEEE 802.11, i.e. Wi-Fi. In particular, the invention proposes devices for supporting such HARQ in Wi-Fi, and further proposes a HARQ method compatible with Wi-Fi.

### BACKGROUND

HARQ is a feature widely used in various wireless communication technologies, such as in Universal Mobile Telecommunications System (UMTS) and Long Term Evolution (LTE). Unlike the Automatic Repeat Request (ARQ), wherein incorrectly decoded packets are discarded at the receiver and are then retransmitted by the transmitter, HARQ enables soft combining (or combining of equalized tones). This means that Log Likelihood Ratios (LLRs) respective to incorrectly decoded packets are stored in a memory of the receiver, and are combined at the receiver with retransmissions of the same information bits from the transmitter.

This soft combining increases the probability for correct packet detection (after retransmission).

Due to the improved performance (after applying such HARQ combining), practical wireless communication systems employing HARQ may also use a lower fade margin in the rate selection algorithm. This means that the rate selection mechanism effectively uses a higher Modulation and Coding Scheme (MCS).

This may be especially beneficial in a Carrier Sense Multiple Access / Collision Avoidance (CSMA/CA) system, where the rate selection algorithm uses a larger fade margin (relative to cell coordination systems), because the interference level has big fluctuations (among other issues, due to hidden nodes).

There are several different flavors of HARQ, for instance:
- Chase Combining (CC): In CC HARQ, the same information and additional parity bits are retransmitted, in order to provide a simple mechanism.
- Incremental Redundancy (IR): In IR HARQ, every retransmission carries a different set of information and additional parity bits. This is more efficient (due to an effectively higher coding rate), but is slightly more complex to implement.

The existing 802.11 Wi-Fi standards (i.e. specifications (a/g/n/ac/ax)) do not support HARQ for various reasons. Supporting HARQ is particularly problematic for the use case of an Aggregated MAC Protocol Data Unit (A-MPDU). In the existing 802.11 standards (and hence also in the respective implementations) the following restrictions exist:
- The Physical Layer (PHY) receives an A-MPDU including one or more MPDUs from the Media Access Control (MAC) layer. However, the PHY does not know where the MPDU boundaries are, i.e. does not know the length of the MPDUs, etc.
- A scrambler operates, based on some scrambling seed, on the entire A-MPDU, regardless of the MPDU boundaries (e.g. with a scrambler / seed periodicity of 128 bits).
- Forward Error Correction (FEC), e.g. Low Density Parity Check (LDPC), operates on blocks of information bits, which are formed regardless of the MPDU boundaries.
- A Block Acknowledge (Block ACK) indicates which MPDU (within the A-MPDU) was decoded correctly, so that retransmission occurs only for incorrectly decoded MPDUs.

Assuming an A-MPDU was transmitted, and some of the MPDUs of the A-MPDU were incorrectly decoded by the receiver, the transmitter will have to retransmit only those MPDUs that failed.

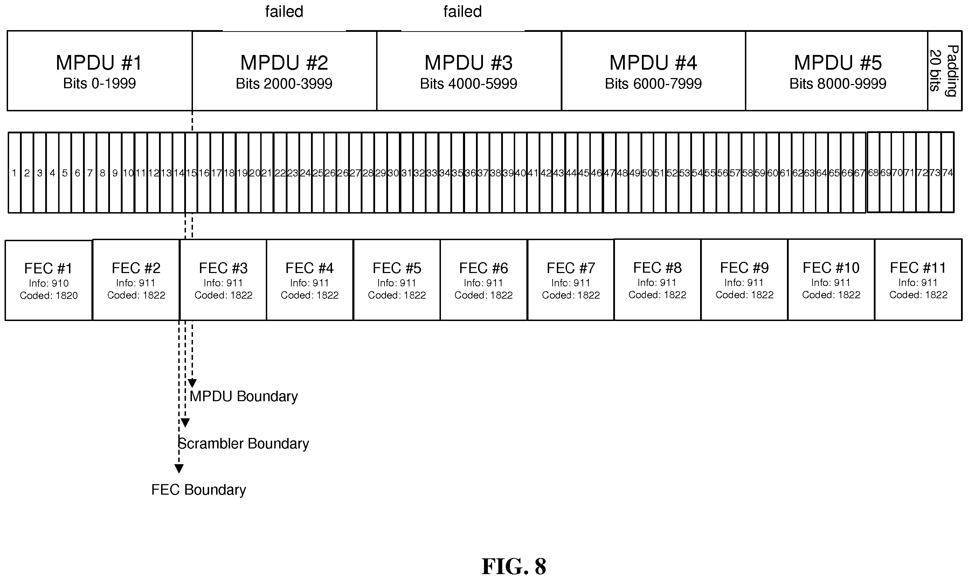

For example, in FIG. 8 an A-MPDU containing 5 MPDUs is transmitted (each MPDU containing 2000 bits) using a coding rate 1/2. As shown, the scrambling seed of the scrambler has a periodicity of 128 bits, i.e. it includes scrambler blocks of size 128 bits. As also shown, the FEC operates on FEC blocks of information bits. The boundaries of the MPDUs, scrambler blocks and FEC blocks are not aligned.

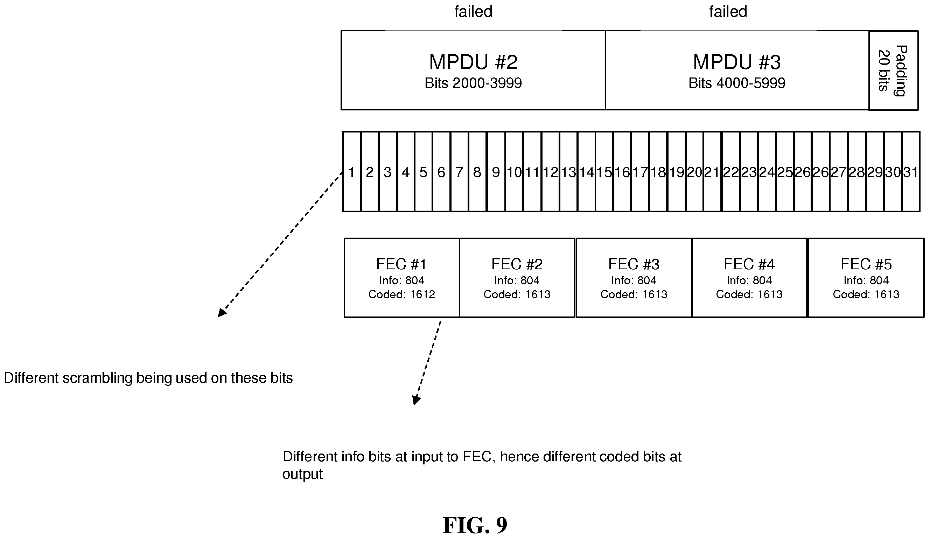

Assuming that the 2^{nd} and 3^{rd} MPDUs fail, these MPDUs are retransmitted as shown in FIG. 9. The retransmission of the failed MPDUs will include different coded bits, due to a different setting of the scrambler (now operated with a different scrambling seed) and FEC (different information bits). Thus, the LLRs of the initial transmission and the retransmission cannot be combined. In essence, the misalignment of the MPDUs and the scrambling seed and FEC blocks poses a problem for supporting HARQ.

US 2008159537 A1 discloses a system and method for scrambling in a wireless communication system.

US 2018076992 A1 discloses a wireless communication device including a receiver and a transmitter.

US 9876614 B1 discloses a method for transmission of media access control (MAC) protocol data units (MPDUs) over a wireless local area network (WLAN) communication channel.

US 2009046713 A1 discloses a method and an apparatus for transmitting non-decodable packets.

### SUMMARY

In view of the above-mentioned disadvantages, the present invention aims to enable HARQ in the standard implementation of 802.11 (i.e. for Wi-Fi). In particular, the invention has the objective to provide devices and methods to incorporate HARQ with as few changes as possible into the existing Wi-Fi standards. The changes should specifically be minimal with respect to existing modules and procedures, like FEC, scrambling, MPDU aggregation, etc. The devices and methods of the invention should account for the misalignment of both scrambling and FEC to MPDU boundaries, so that regardless of a location of a MPDU within an A-MPDU, a HARQ procedure can be carried out.

The objective of the present invention is achieved by the solution provided in the enclosed independent claims. Advantageous implementations of the present invention are further defined in the dependent claims. In the following, parts of the description and drawings referring to embodiments not covered by the claims, are not part of the invention, but are illustrative examples necessary for understanding the invention.

In particular, the invention proposes a solutions for supporting HARQ in 802.11 (Wi-Fi), by focusing on the most typical case of HARQ with the transmission of an A-MPDU. A single MPDU transmission is of low efficiency in 802.11. Hence, transmitting an A-MPDU will in many cases be used.

In this document CC HARQ, where the same coded bits are retransmitted and soft bits (LLRs) are combined at the receiver (simplest to implement), is presented as a reference. However, the solution of the invention is applicable to IR HARQ as well.

A first aspect of the invention provides a device for supporting HARQ, the device being configured to transmit to a receiver an A-MPDU according to the IEEE 802.11 standards and including at least two data units, and to transmit to the receiver, together with the A-MPDU, HARQ block information about a division of the A-MPDU into a plurality of determined HARQ Blocks, wherein the device is further configured to scramble and encode the A-MPDU by performing scrambling and by using FEC independently on each of the plurality of HARQ blocks, and to retransmit to the receiver, if a decoding of at least one data unit failed at the receiver, at least a part of the A-MPDU including the at least one failed data unit, wherein each HARQ block includes at least one data unit, wherein the retransmitted part contains each HARQ block that includes a failed data unit, and wherein the device is further configured to scramble and encode the at least one failed data unit in the retransmitted part by performing scrambling based on the same scrambling seed and by using FEC with the same FEC outputs that were used for scrambling and encoding said data unit in the A-MPDU.

By using the same scrambling seed to scramble the data unit in the initially transmitted A-MPDU, and in the retransmitted part, and by using the same FEC outputs, the receiver is able to combine the respective transmissions for an improved decoding. Accordingly, a HARQ procedure can be carried out regardless of a location of the data unit (e.g. MPDU) within the A-MPDU. Thus, the device of the first aspect enables HARQ in Wi-Fi.

A scrambling seed is a sequence of bits, which is used as an input (e.g. to a scrambler) for scrambling the bits of the A-MPDU and the retransmitted part, respectively. The scrambling seed (bit sequence) may be periodic, e.g. after each 128 bits the same 128 bits may be repeated (i.e. the scrambling seed can be seen as repetitive arrangement of identical scrambling blocks). Using the same scrambling seed for the failed data unit - in the initially transmitted A-MPDU on the one hand, and in the retransmitted part on the other hand - means that the bits of the data unit are in both cases scrambled using the same scrambling bits / scrambling block(s). The same scrambling seed can be achieved, for example, by memorizing it, e.g. for each A-MPDU and/or data unit. Alternatively, by dividing the A-MPDU into determined HARQ blocks, which are then retransmitted as smallest units of the retransmitted part (i.e. the retransmitted part includes at least one HARQ block and an integer number of HARQ blocks), and which may be aligned with the periodicity of the scrambling seed. FEC outputs are the encoded bits output after FEC. Using the same FEC outputs means that encoding yields the same coded bits after performing FEC. To this end, it may be ensured that the FEC performed on the failed data unit is operated based on the same blocks of information bits - for the data unit in the initially transmitted A-MPDU on the one hand, and in the retransmitted part on the other hand. The same FEC outputs can be achieved, for example, by memorizing the FEC outputs for the A-MPDU and/or for the data units, or memorizing FEC parameters that resulted in the FEC outputs. Alternatively, it can be achieved by using the above-described HARQ blocks, and making the HARQ blocks the same size as FEC blocks of information bits, on which the FEC is operated.

In an implementation form of the first aspect, the device is further configured to modify the FEC outputs after encoding the scrambled A-MPDU, particularly by puncturing, and modify the FEC outputs after encoding the at least one failed data unit in the retransmitted part differently than modifying the FEC outputs after encoding the scrambled A-MPDU, particularly by different puncturing.

Accordingly, the device also supports IR HARQ, wherein modifications of the FEC outputs are typically applied. The device may transmit to the receiver an indication of how the puncturing changes between (re)transmissions, i.e. may send puncturing information. Alternatively, there may be a pre-defined agreement between the device and the receiver determining how bits are punctured in each (re)transmission.

In a further implementation form of the first aspect, the device is further configured to receive an ACK and/or a NACK message from the receiver regarding one or more data units that were correctly and/or incorrectly decoded at the receiver.

Thus, the device can derive, which data units could not be decoded at the receiver, and need to be retransmitted.

In a further implementation form of the first aspect, the retransmitted part includes the at least one failed data unit and additional bits.

Adding additional bits helps to ensure that the same FEC outputs are used for encoding the data unit in the retransmitted part.

The use of HARQ blocks leads to a very small overhead, and a retransmission of failed data units only. Further, the same Block Acknowledge operation can be maintained.

In a further implementation form of the first aspect, a HARQ block includes at least one data unit and additional padding bits.

The padding bits allow using HARQ blocks of well-defined size (known at device and receiver), while including into each HARQ block an integer number of data units.

In a further implementation form of the first aspect, a HARQ block has a number of bits that is a multiple of a total number of bits of a scrambling block.

Thus, it is efficiently ensured that the same scrambling seed is used when retransmitting a failed data unit in a HARQ block, such that the scrambler operates continuously and need not be reset after every HARQ block.

In a further implementation form of the first aspect, the HARQ block information comprises a size, number and/or location of the HARQ blocks in the A-MPDU.

"Together" may include that the HARQ block information is transmitted within a signaling part (e.g. preamble) related to the A-MPDU. The HARQ block information can, however, also be included in the A-MPDU. The HARQ block information can be pre-determined, e.g. it can be determined prior to the communication between the device and the receiver.

In a further implementation form of the first aspect, the device is further configured to concatenate multiple data units and/or fragment one or more data units to generate data units of about the size of a HARQ block.

In a further implementation form of the first aspect, the HARQ blocks in the A-MPDU are all of a same determined size.

This provides an easy implementation for both device and receiver.

In a further implementation form of the first aspect, the device is further configured to maintain the scrambling seed and/or FEC parameters that were used for scrambling and encoding the at least one data unit in the A-MPDU, and use the maintained scrambling seed and/or FEC parameters for scrambling and encoding the at least one failed data unit in the retransmitted part.

By memorizing the scrambling seed and/or FEC parameters, the device is efficiently able to use the same scrambling seed and same FEC outputs when scrambling and encoding a failed data unit in the retransmitted part (the same that was used for scrambling and encoding the data unit in the A-MPDU).

FEC parameters may include FEC block sizes. The maintained FEC parameters may further include inputs to each FEC and each output.

In a further implementation form of the first aspect, the device is further configured to maintain the scrambled bits and/or coded bits obtained after performing scrambling and/or after using FEC during the scrambling and encoding of the A-MPDU, and use the maintained scrambled bits and/or coded bits for generating the at least one failed data unit in the retransmitted part.

By memorizing the scrambled and/or coded bits, the device is efficiently able to use the same scrambling seed and same FEC outputs when scrambling and encoding a failed data unit in the retransmitted part.

In a further implementation form of the first aspect, the bits of the at least one failed data unit and the additional bits span the entire FEC outputs that were used for encoding said data unit in the A-MPDU.

Thus, it is ensured that the same FEC outputs can be used for the failed data unit in the retransmitted part.

In a further implementation form of the first aspect, the device is configured to transmit to the receiver, together with the retransmitted part, a retransmission indication.

This provides the receiver with the information that the received transmission is a retransmission. Thus, the receiver is accordingly able to decode the retransmission and combine it with the initial transmission.

A second aspect of the invention provides a device for supporting HARQ, the device being configured to receive from a transmitter a scrambled and FEC encoded A-MPDU according to the IEEE 802.11 standards and including at least two encoded data units, receive from the transmitter, together with the A-MPDU, HARQ block information about a division of the A-MPDU into a plurality of determined HARQ Blocks, decode the at least two data units, send to the transmitter an ACK and/or a NACK message regarding one or more data units that were correctly and/or incorrectly decoded, receive from the transmitter, if a decoding of at least one data unit failed, a retransmission of at least a part of the A-MPDU including the at least one failed data unit, and to decode the at least one retransmitted data unit and soft combine it with the previously received failed data unit, wherein each HARQ block includes at least one data unit, wherein each of the plurality of HARQ blocks in the A-MPDU is scrambled and FEC encoded independently, and wherein the retransmitted part contains each HARQ block that includes a failed data unit.

Thereby, HARQ is enabled for Wi-Fi. The decoding of the data units becomes more reliable.

A third aspect of the invention provides a method for HARQ, the method comprising transmitting to a receiver an A-MPDU according to the IEEE 802.11 standards and including at least two data units, transmitting to the receiver, together with the A-MPDU, HARQ block information about a division of the A-MPDU into a plurality of determined HARQ Blocks, wherein each of the plurality of HARQ blocks in the A-MPDU is scrambled independently and each of the plurality of scrambled HARQ blocks the scrambled A-MPDU is encoded independently by using FEC, and retransmitting to the receiver, if decoding of at least one data unit failed at the receiver, at least a part of the A-MPDU including the at least one failed data unit, wherein each HARQ block includes at least one data unit, wherein the retransmitted part contains each HARQ block that includes a failed data unit, and wherein the at least one data unit in the retransmitted part is scrambled and encoded by performing scrambling based on the same scrambling seed and using FEC with the same FEC outputs that were used for scrambling and encoding said data unit in the A-MPDU.

In an implementation form of the third aspect, the method further comprises modifying the FEC outputs after encoding the scrambled A-MPDU, particularly by puncturing, and modifying the FEC outputs after encoding the at least one failed data unit in the retransmitted part differently than modifying the FEC outputs after encoding the scrambled A-MPDU, particularly by different puncturing.

In a further implementation form of the third aspect, the method further comprises receiving an ACK and/or a NACK message from the receiver regarding one or more data units that were correctly and/or incorrectly decoded at the receiver.

In a further implementation form of the third aspect, the retransmitted part includes the at least one failed data unit and additional bits.

In a further implementation form of the third aspect, this HARQ block includes at least one data unit and additional padding bits.

In a further implementation form of the third aspect, a HARQ block has a number of bits that is a multiple of a total number of bits of a scrambling block.

In a further implementation form of the third aspect, the HARQ block information comprises a size, number and/or location of the HARQ blocks in the A-MPDU.

In a further implementation form of the third aspect, the method further comprises concatenating multiple data units and/or fragmenting one or more data units to generate data units of about the size of a HARQ block.

In a further implementation form of the third aspect, the HARQ blocks in the A-MPDU are all of a same determined size.

In a further implementation form of the third aspect, the method comprises maintaining the scrambling seed and/or FEC parameters that were used for scrambling and encoding the at least one data unit in the A-MPDU, and using the maintained scrambling seed and/or FEC parameters for scrambling and encoding the at least one failed data unit in the retransmitted part.

In a further implementation form of the third aspect, the method comprises maintaining the scrambled bits and/or coded bits obtained after performing scrambling and/or after using FEC during the scrambling and encoding of the A-MPDU, and using the maintained scrambled bits and/or coded bits for generating the at least one failed data unit in the retransmitted part.

In a further implementation form of the third aspect, the bits of the at least one failed data unit and the additional bits span the entire FEC outputs that were used for encoding said data unit in the A-MPDU.

In a further implementation form of the third aspect, the method comprises transmitting to the receiver, together with the retransmitted part, a retransmission indication.

The method of the third aspect and its implementation forms achieve the same advantages and effects as the device of the first aspect and its respective implementation forms.

It has to be noted that all devices, elements, units and means described in the present application could be implemented in the software or hardware elements or any kind or combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows a device according to an embodiment of the invention.
- FIG. 2: shows a device according to an embodiment of the invention.
- FIG. 3: shows a retransmission scheme according to a first solution for a device according to an embodiment of the invention.
- FIG. 4: shows a retransmission scheme according to a second solution for a device according to an embodiment of the invention.
- FIG. 5: shows PER (Packet Error Rate) results compared for transmission schemes without HARQ and with HARQ according to the invention.
- FIG. 6: shows a throughput of an A-MPDU (of varying aggregation size) for transmission schemes without HARQ and with HARQ according to the invention.
- FIG. 7: shows a method according to an embodiment of the invention.
- FIG. 8: shows an example of a transmitted A-MPDU containing 5 MPDUs, and illustrates different boundaries for FEC, scrambler and MPDUs.
- FIG. 9: shows a conventional retransmission of failed MPDUs, which leads to different scrambling and different coded bits compared to FIG. 8.

### DETAILED DESCRIPTION OF EMBODIMENTS

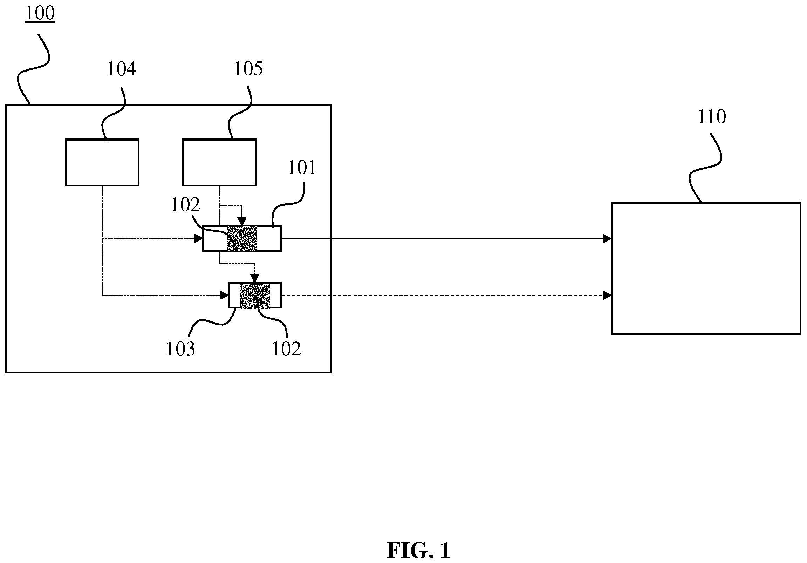

FIG. 1 shows a device 100 according to an embodiment of the invention. The device 100 is configured to support HARQ for (NG) Wi-Fi. The device 100 may thereby be a Wi-Fi Access Point (AP), router or the like. The device 100 may also by a non-AP Station (STA) such as a smartphone. The device 100 may include a scrambler and a FEC unit.

The device 100 is configured to transmit, to a receiver 110, an aggregated data unit 101 including at least one data unit 102. The aggregated data unit 101 is an A-MPDU and the at least one data unit 102 may be a MPDU.

The device 100 is configured to scramble the aggregated data unit 101 by performing scrambling, and to encode the scrambled aggregated data unit 101 by using FEC. The scrambling can, for instance, be implemented by the scrambler of the device 100, and the FEC can be implemented by the FEC unit of the device. The scrambling is based on a scrambling seed (bit sequence), particularly a periodic scrambling seed, wherein the periodicity in effect divides the scrambling seed into scrambler blocks containing a determined number of bits (e.g. 128 bits each). The scrambling seed is used as input to the scrambler to scramble the bits of the aggregated data unit 101, and thus the bits of each data unit 102.

The device 100 is further configured to retransmit, to the receiver 110, if a decoding of at least one data unit 102 failed at the receiver 110, at least a part 103 of the aggregated data unit 101 including the at least one failed data unit 102. That is, only the failed at least one data unit 102 can be transmitted, or e.g. the at least one failed data unit 102 and some additional bits. The device 100 may determine that the decoding of a data unit 102 at the receiver 110 failed by receiving and analyzing an ACK and/or a Not-Acknowledge (NACK) message from the receiver 110 concerning one or more data units 102 that were correctly and/or incorrectly decoded at the receiver 110.

When retransmitting the part 103 of the aggregated data unit 101, the device 100 is configured to scramble and encode the at least one failed data unit 102 in the retransmitted part 103 by performing scrambling based on the same scrambling seed 104 and by using FEC with the same FEC outputs 105 that were used for scrambling and encoding said data unit 102 in the aggregated data unit 101. That is, the bits of the data unit 102 are scrambled in both cases - when transmitted in the aggregated data unit 101 and when transmitted in the retransmitted part 103 - based on the same scrambling bits of the scrambling seed. FEC is further performed based on the same blocks of information bits. In such a manner, the bits after scrambling and FEC in the retransmission are the same as in the original transmission.

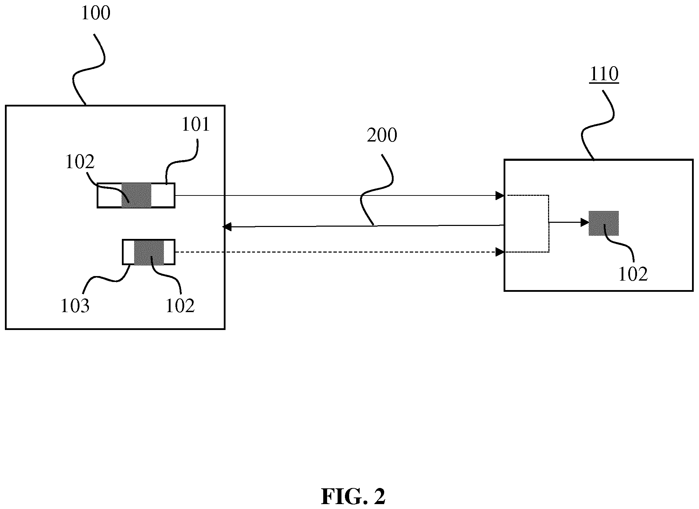

FIG. 2 shows a device 110 according to an embodiment of the invention. The device 110 is configured to support HARQ for (NG) Wi-Fi. The device 110 may be a Wi-Fi client, STA or the like. The device 100 may also be an AP. The device 110 may include a descrambler and a FEC unit. The device 110 may particularly be the receiver 110 described with respect to FIG. 1.

The device 110 is configured to receive from a transmitter 100 an encoded aggregated data unit 101 including at least one encoded data unit 102. The transmitter 100 may be the device 100 described with respect to FIG. 1. The aggregated data unit 101 is an A-MPDU and the data unit 102 may be an MPDU.

The device 110 is further configured to decode the at least one data unit 102, and send to the transmitter 100 an ACK and/or a NACK message 200 regarding one or more data units 102 that were correctly and/or incorrectly decoded. The decoding may be performed by the FEC unit, and may include descrambling performed by the descrambler. The descrambling is based on a descrambling seed which corresponds to the scrambling seed used at the transmitter 100.

The device 110 is further configured to receive from the transmitter 100, if a decoding of at least one data unit failed 102, and was accordingly reflected in the ACK and/or NACK message, a retransmission of at least part 103 of the aggregated data unit 101 including the at least one failed data unit 102. The device 110 is then able to decode the at least one retransmitted data unit 102 and to soft combine it with the previously received failed data unit 102. Thus, it can obtain a more reliable decoding of the data unit 102.

In the following, specific solutions of retransmitting schemes for the at least part 103 of the aggregated data unit 101 by the device 100 are explained in more detail. In particular, the aggregated data unit 101 is assumed to be an A-MPDU 101, which includes one or more data units 102 that are all MPDUs 102.

A first, very simple solution is retransmitting the entire A-MPDU 101, regardless of which MPDU 102 in the initially transmitted A-MPDU 101 failed. In this case, the device 100 preferably informs the receiver 110 that the current transmission is a retransmission, e.g. by sending a retransmission indication. The same scrambling seed 104 and FEC outputs 105 as for the initial transmission are used for the retransmission of the A-MPDU 101.

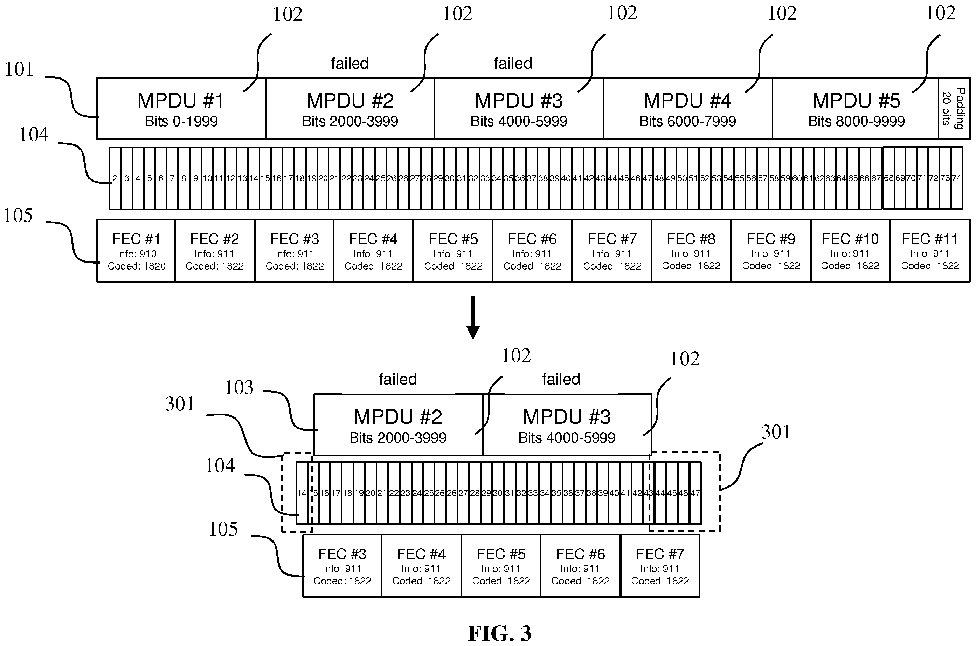

A second solution is shown in FIG. 3, and bases on the following:
- In case of a retransmission of a retransmitted part 103, all bits or Quadrature Amplitude Modulations (QAMs)/constellation mapping outputs respective to FEC blocks that 'contain' failed MPDUs 102 (here FEC blocks #3 to #7) are transmitted. That is, the bits of the failed MPDUs 102 and additional bits 301 ("tails") may be transmitted to ensure that the same FEC outputs 105 are used in the initial transmission and the retransmission.
- If aggregating the retransmitted part 103 with new MPDUs 102, the retransmitted part 103 should be located at the beginning (known to both sides, device 100 and receiver 110) of the transmission.
- At the receiver 110, LLRs of a failed MPDU 102 are combined and bits not part of the failed MPDU 102 are discarded.
- The device 100 may maintain, e.g. in a memory, the information bits or coded bits/QAMs for the entire A-MPDU 101. That is, in order to retransmit the same coded bits, the device 100 may maintain the past coded bits/QAMs. In other words, the device 100 may maintain the scrambled bits and/or coded bits obtained after performing scrambling and/or after using FEC during the scrambling and encoding of the A-MPDU 101. It can then use the maintained scrambled bits and/or coded bits for generating the at least one failed data unit 102 in the retransmitted part 103.
- Alternatively, the MAC of the device 100 may indicate to the PHY of the device 100, which bits should undergo scrambling (and at what scrambling state) and where FEC should begin, also maintaining the same FEC parameters as in the initial transmission (same number of shortening/puncturing/repetition bits, etc.). For instance, the device 100 may maintain the scrambling seed 104 and/or FEC parameters that were used for scrambling and encoding the at least one data unit 102 in the aggregated data unit 101. It may then use the maintained scrambling seed 104 and/or FEC parameters for scrambling and encoding the at least one failed data unit 102 in the retransmitted part 103.

The second solution may be further supported by the following:
- An indication of a retransmission may be sent from the device 100 to the receiver 110, e.g. together with the retransmitted pat 103.
- The same coded bits/QAMs (with same scrambling seed 104) may be retransmitted, and the retransmitted bits may be at a pre-defined place, such as the beginning of a Physical Protocol Data Unit (PPDU).

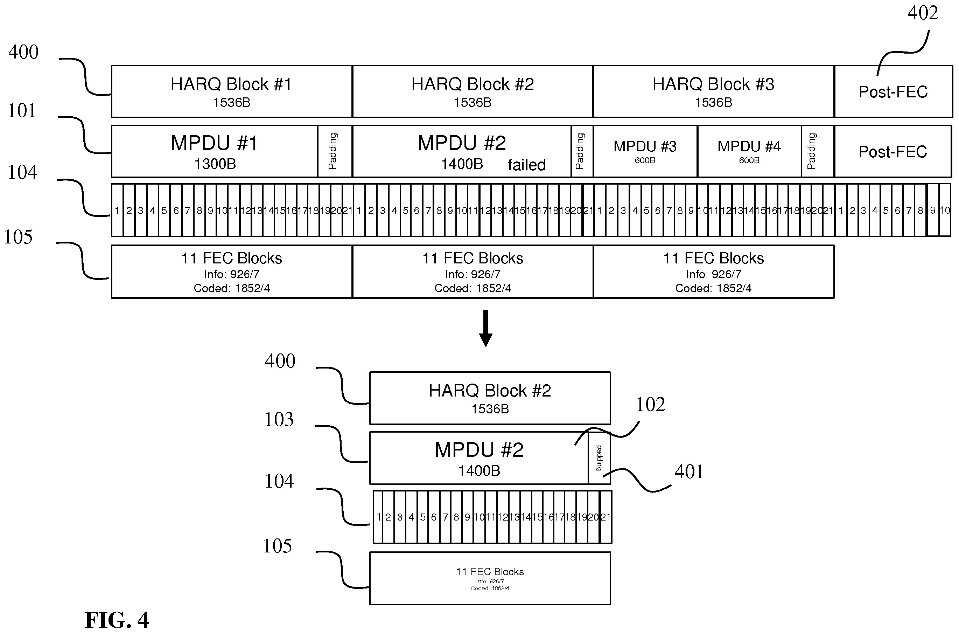

A third solution is shown in FIG. 4 and bases on the idea that if the FEC/scrambling would be performed per MPDU 102 (instead of for the entire A-MPDU 101), things would be easier. However, there is an inherent problem, namely the receiver's PHY layer does not know in advance what is the size of the MPDU 102, so it cannot compute all LDPC parameters (number of FEC blocks, size, etc.).

Hence, the third solution proposes to pre-define a 'HARQ Block' 400, which is of known size (i.e. known to both device 100 and receiver 110), and on which FEC/scrambling is performed independent of other HARQ blocks 400. The size of the HARQ block 400 may be defined in the specification (single size, one value per A-MPDU length, etc.) or may be negotiated between the device 100 and the receiver 110. For instance, the size of the HARQ block 400, which may contain at least one MPDU 102, a Zero Length Delimiter (ZLD) and padding 401, may be selected such that it is a multiple of scrambler seed period (128 bits). A-MPDU aggregation or MPDU fragmentation can be used to reduce overhead (padding 401 to reach HARQ block 400 size).

For example, a HARQ block 400 of size 1536Bytes may be chosen (as exemplarily shown in FIG. 4), which is a multiple of 128 bits. It yields 13 LDPC codewords of size 926/7 information bits and 1852/4 coded bits. MPDUs 102 smaller than 1536B shall be first padded with 0 to 3 zero bytes to align them to 32-bits and then with 4-byte ZLDs to 1536B.

In order to adhere to symbol boundary, anything beyond the last HARQ block 400 may be denoted post-FEC bits. Both the device 100 and the receiver 110 may know in advance the size of a HARQ block 400, so that the location of the first post-FEC bit is easy for them to compute. FIG. 4 shows particularly an example with several HARQ blocks 400, each containing at least one MPDU 101. In the example, MPDU #2 fails, so that the entire HARQ block #2 is retransmitted, yielding the same coded bits, which can be combined with previous LLRs.

The third solution may be further supported by the following:
- Signaling of new transmission format with per HARQ block FEC. For instance, HARQ block information about a division of the A-MPDU 101 into the HARQ Blocks 400, particularly HARQ block information comprising a size, number and/or location of the HARQ blocks 400 in the A-MPDU 101 is transmitted.
- Signaling of a retransmission, for instance, a retransmission indication together with the retransmitted part 103 (retransmitted HARQ block(s) 400).
- MPDUs 102 may be padded/concatenated/fragmented to yield HARQ block 400 size. That is, the device 100 may be able to concatenate multiple MPDUs 102 and/or fragment one or more MPDUs 102 to generate MPDUs 102 of about the size of a HARQ block 400.
- A coding rate may be kept unchanged between retransmissions (a modulation can change).
- Retransmitted bits, i.e. the retransmitted part 103, may be at a pre-defined place, such as the beginning of PPDU, and may be in the same order as they were originally transmitted.
- In case of a single short MPDU 102, which failed, and varying HARQ block 400 sizes (e.g. smaller size for smaller MPDU 102), a retransmission of the failed MPDU 102 should not be contained within a larger A-MPDU 101 with different HARQ block size.
- Binary Convolutional Coding (BCC) can be used in addition to LDPC.

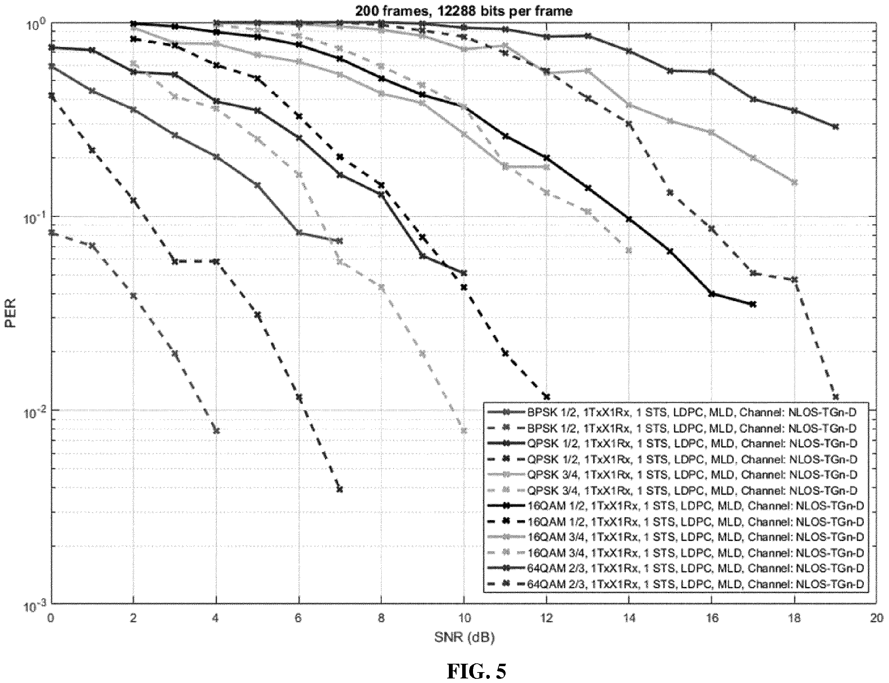

   FIG. 5 depicts the improved performance with HARQ according to the invention, i.e. by combining LLRs respective to two frames (1536B PPDUs), compared to without HARQ. The following is here assumed:
- TGn-D Non-Line-Of- Sight (NLOS) channel model.
- Retransmissions use a different frequency allocation (yields diversity).
- Dashed lines correspond to always combining 2 frames; solid lines correspond to a single frame (no combining). As can be derived from FIG. 5, there is about a 6dB improvement in most cases @ a PER=10% for a transmission scheme using HARQ according to the invention.

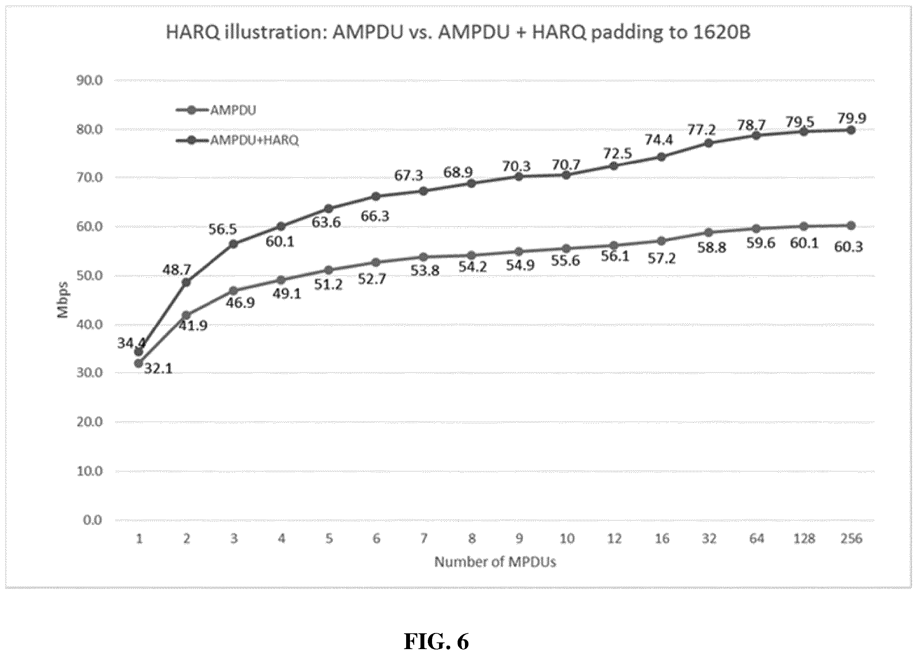

   FIG. 6 depicts the performance improvement, where HARQ is used only in cases of failed MPDUs 102. The comparison is between:
- A-MPDU of 1500B MPDUs 102 transmitted without HARQ @MCS3, N_{SS}=1, Short GI, RU484 (40MHz).
- SNR=15.6dB (PER=0.1), and the same A-MPDU 101 transmitted under the same channel conditions with HARQ at MCS4, PER after HARQ is 0.003.

In this scenario, FIG. 6 shows that there is up to 31% data rate improvement as a function of A-MPDU size for a transmission scheme using HARQ according to the invention.

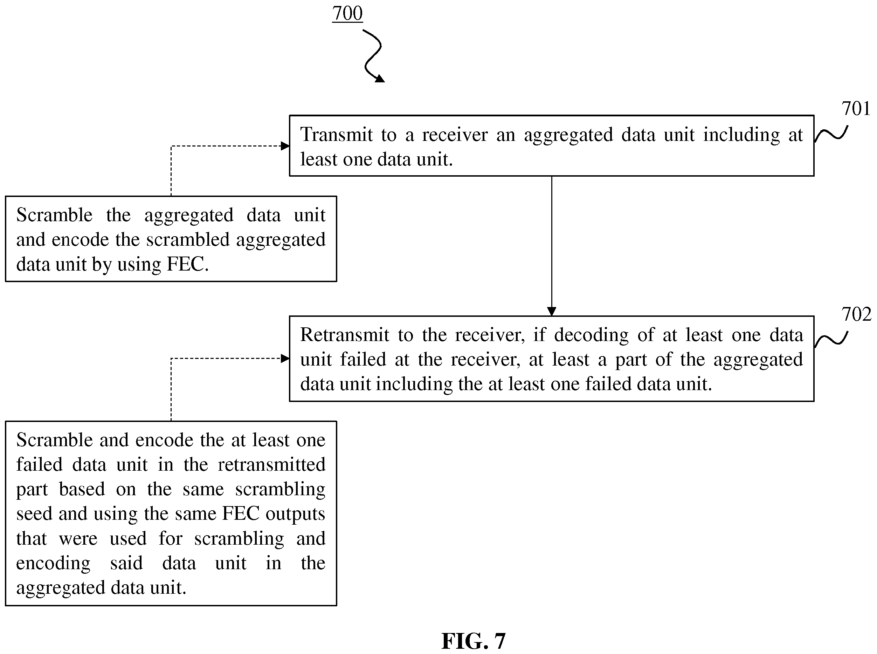

FIG. 7 shows a method 700 according to an embodiment of the invention, particularly a HARQ method for Wi-Fi. The method 700 may be carried out by an access point or router, and/or by the device 100 shown in FIG. 1.

The method 700 includes a step 701 of transmitting to a receiver 110 and aggregated data unit 101 (e.g. an A-MPDU) including one or more data units 102 (e.g. MPDUs). In or before this step 701, the method 700 includes scrambling the aggregated data unit 101 and encoding the scrambled aggregated data unit 101 by using FEC. That is, the scrambled and encoded aggregated data unit 101 is transmitted to the receiver 110.

The method 700 includes further a step 702 of retransmitting to the receiver 100 at least a part 103 of the aggregated data unit 101 including at least one failed data unit 102. The failed data unit 102 is a data unit 102 that the receiver could not decode. In or before this step 702, the method 700 includes scrambling and encoding the at least one failed data unit 102 based on the same scrambling seed (same scrambling bit sequence) and using the same FEC outputs that were used for scrambling and encoding the same data unit 102 in the initially transmitted aggregated data unit 102.

The scope of protection of the invention is defined in the appended set of claims.

## Claims

1. Device (100) for supporting Hybrid Automatic Repeat Request, HARQ, the device (100) being configured to
transmit to a receiver (110) an Aggregated Media Access Control Protocol Data Unit, A-MPDU (101), according to the IEEE 802.11 standards and including at least two data units (102), and to
transmit to the receiver (110), together with the A-MPDU (101), HARQ block information about a division of the A-MPDU (101) into a plurality of determined HARQ Blocks (400),
wherein the device (100) is further configured to scramble and encode the A-MPDU (101) by performing scrambling and by using Forward Error Correction, FEC, independently on each of the plurality of HARQ blocks (400), and to
retransmit to the receiver (110), if a decoding of at least one data unit (102) failed at the receiver (110), at least a part (103) of the A-MPDU (101) including the at least one failed data unit (102),
wherein each HARQ block (400) includes at least one data unit (102),
wherein the retransmitted part (103) contains each HARQ block (400) that includes a failed data unit (102), and
wherein the device (100) is further configured to scramble and encode the at least one failed data unit (102) in the retransmitted part (103) by performing scrambling based on the same scrambling seed (104) and by using FEC with the same FEC outputs (105) that were used for scrambling and encoding said data unit (102) in the A-MPDU (101).

2. Device (100) according to claim 1, further configured to
modify the FEC outputs (105) after encoding the scrambled A-MPDU (101), particularly by puncturing, and modify the FEC outputs (105) after encoding the at least one failed data unit (102) in the retransmitted part (103) differently than modifying the FEC outputs (105) after encoding the scrambled A-MPDU (101), particularly by different puncturing.

3. Device (100) according to the claim 1 or 2, wherein
the retransmitted part (103) includes the at least one failed data unit (102) and additional bits (301).

4. Device (100) according to any of the preceding claims, wherein
a HARQ block (400) includes at least one data unit (102) and additional padding bits (401).

5. Device (100) according to any of the preceding claims, further configured to
maintain the scrambling seed (104) and/or FEC parameters that were used for scrambling and encoding the at least two data units (102) in the A-MPDU (101), and
use the maintained scrambling seed (104) and/or FEC parameters for scrambling and encoding the at least one failed data unit (102) in the retransmitted part (103).

6. Method (700) for Hybrid Automatic Repeat Request, HARQ, the method (700) comprising
transmitting (701) to a receiver (110) an Aggregated Media Access Control Protocol Data Unit, A-MPDU (101), according to the IEEE 802.11 standards and including at least two data units (102),
transmitting to the receiver (110), together with the A-MPDU (101), HARQ block information about a division of the A-MPDU (101) into a plurality of determined HARQ Blocks (400),
wherein each of the plurality of HARQ blocks (400) in the A-MPDU (101) is scrambled independently and each of the plurality of scrambled HARQ blocks (400) is encoded independently by using Forward Error Correction, FEC, and
retransmitting (702) to the receiver (110), if decoding of at least one data unit (102) failed at the receiver (110), at least a part of the A-MPDU (101) including the at least one failed data unit (102),
wherein each HARQ block (400) includes at least one data unit (102),
wherein the retransmitted part (103) contains each HARQ block (400) that includes a failed data unit (102), and
wherein the at least one failed data unit (102) in the retransmitted part (103) is scrambled and encoded by performing scrambling based on the same scrambling seed (104) and using FEC with the same FEC outputs (105) that were used for scrambling and encoding said data unit (102) in the A-MPDU (101).

## Patentansprüche

1. Vorrichtung (100) zum Unterstützen von hybrider automatischer Wiederholungsanforderung, HARQ, wobei die Vorrichtung (100) zu Folgendem konfiguriert ist:
Übertragen, an einen Empfänger (110), einer aggregierten Medienzugriffssteuerprotokolldateneinheit, A-MPDU (101), gemäß den IEEE 802.11-Standards und mindestens zwei Dateneinheiten (102) beinhaltend und
Übertragen, an den Empfänger (110), zusammen mit der A-MPDU (101), von HARQ-Blockinformationen über eine Aufteilung der A-MPDU (101) in eine Vielzahl bestimmter HARQ-Blöcke (400),
wobei die Vorrichtung (100) ferner dazu konfiguriert ist, die A-MPDU (101) durch Durchführen einer Verwürfelung und durch Verwenden von Vorwärtsfehlerkorrektur, FEC, unabhängig auf jedem der Vielzahl HARQ-Blöcke (400) zu verwürfeln und zu codieren, und
erneutes Übertragen, an den Empfänger (110), wenn Decodieren mindestens einer Dateneinheit (102) an dem Empfänger (110) erfolglos war, mindestens eines Teils (103) der A-MPDU (101), der die mindestens eine erfolglose Dateneinheit (102) beinhaltet,
wobei jeder HARQ-Block (400) mindestens eine Dateneinheit (102) beinhaltet,
wobei der erneut übertragene Teil (103) jeden HARQ-Block (400) enthält, der eine erfolglose Dateneinheit (102) beinhaltet, und wobei die Vorrichtung (100) ferner dazu konfiguriert ist, die mindestens eine erfolglose Dateneinheit (102) in dem erneut übertragenen Teil (103) durch Durchführen einer Verwürfelung basierend auf dem gleichen Verwürfelungs-Seed (104) und durch Verwenden der FEC mit den gleichen FEC-Ausgaben (105), die zum Verwürfeln und Codieren der Dateneinheit (102) in der A-MPDU (101) verwendet wurden, zu verwürfeln und zu codieren.

2. Vorrichtung (100) nach Anspruch 1, die ferner zu Folgendem konfiguriert ist:
die FEC-Ausgaben (105) nach dem Codieren der verwürfelten A-MPDU (101) zu modifizieren, insbesondere durch Durchstechen, und die FEC-Ausgaben (105) nach dem Codieren der mindestens einen erfolglosen Dateneinheit (102) in dem erneut übertragenen Teil (103) anders als das Modifizieren der FEC-Ausgaben (105) nach dem Codieren der verwürfelten A-MPDU (101) zu modifizieren, insbesondere durch anderes Durchstechen.

3. Vorrichtung (100) nach Anspruch 1 oder 2, wobei der erneut übertragene Teil (103) die mindestens eine erfolglose Dateneinheit (102) und zusätzliche Bits (301) beinhaltet.

4. Vorrichtung (100) nach einem der vorhergehenden Ansprüche, wobei
ein HARQ-Block (400) mindestens eine Dateneinheit (102) und zusätzliche Füllbits (401) beinhaltet.

5. Vorrichtung (100) nach einem der vorhergehenden Ansprüche, die ferner zu Folgendem konfiguriert ist:
Beibehalten des Verwürfelungs-Seeds (104) und/oder der FEC-Parameter, die zum Verwürfeln und Codieren der mindestens zwei Dateneinheiten (102) in der A-MPDU (101) verwendet wurden, und Verwenden der beibehaltenen Verwürfelungs-Seeds (104) und/oder der FEC-Parameter zum Verwürfeln und Codieren der mindestens einen erfolglosen Dateneinheit (102) in dem erneut übertragenen Teil (103).

6. Verfahren (700) für hybride automatische Wiederholungsanforderung, HARQ, wobei das Verfahren (700) Folgendes umfasst:
Übertragen (701), an einen Empfänger (110), einer aggregierten Medienzugriffssteuerprotokolldateneinheit, A-MPDU (101), gemäß den IEEE 802.11-Standards und mindestens zwei Dateneinheiten (102) beinhaltend,
Übertragen, an den Empfänger (110), zusammen mit der A-MPDU (101), von HARQ-Blockinformationen über eine Aufteilung der A-MPDU (101) in eine Vielzahl bestimmter HARQ-Blöcke (400),
wobei jeder der Vielzahl HARQ-Blöcke (400) in der A-MPDU (101) unabhängig verwürfelt wird und jeder der Vielzahl verwürfelter HARQ-Blöcke (400) unabhängig unter Verwendung von Vorwärtsfehlerkorrektur, FEC, codiert wird und
erneutes Übertragen (702), an den Empfänger (110), wenn Decodieren mindestens einer Dateneinheit (102) an dem Empfänger (110) erfolglos war, mindestens eines Teils der A-MPDU (101), der die mindestens eine erfolglose Dateneinheit (102) beinhaltet,
wobei jeder HARQ-Block (400) mindestens eine Dateneinheit (102) beinhaltet,
wobei der erneut übertragene Teil (103) jeden HARQ-Block (400) enthält, der eine erfolglose Dateneinheit (102) beinhaltet, und wobei die mindestens eine erfolglose Dateneinheit (102) in dem erneut übertragenen Teil (103) durch Durchführen einer Verwürfelung basierend auf dem gleichen Verwürfelungs-Seed (104) und durch Verwenden der FEC mit den gleichen FEC-Ausgaben (105), die zum Verwürfeln und Codieren der Dateneinheit (102) in der A-MPDU (101) verwendet wurden, verwürfelt und codiert wird.

## Revendications

1. Dispositif (100) de prise en charge de demande de répétition automatique hybride, HARQ, le dispositif (100) étant configuré pour
transmettre à un récepteur (110) une unité de données de protocole de contrôle d'accès au support agrégé, A-MPDU (101), selon les normes IEEE 802.11 et comportant au moins deux unités de données (102), et pour
transmettre au récepteur (110), conjointement avec l'A-MPDU (101), des informations de bloc HARQ concernant une division de l'A-MPDU (101) en une pluralité de blocs HARQ (400) déterminés, dans lequel le dispositif (100) est également configuré pour brouiller et coder l'A-MPDU (101) en effectuant un brouillage et en utilisant une correction d'erreur directe, FEC, indépendamment sur chacun de la pluralité de blocs HARQ (400), et pour
retransmettre au récepteur (110), si un décodage d'au moins une unité de données (102) a échoué au niveau du récepteur (110), au moins une partie (103) de l'A-MPDU (101) comportant l'au moins une unité de données (102) défaillante,
dans lequel chaque bloc HARQ (400) comporte au moins une unité de données (102),
dans lequel la partie retransmise (103) contient chaque bloc HARQ (400) qui comporte une unité de données (102) défaillante, et
dans lequel le dispositif (100) est également configuré pour brouiller et coder l'au moins une unité de données (102) défaillante dans la partie retransmise (103) en effectuant un brouillage basé sur le même germe de brouillage (104) et en utilisant une FEC avec les mêmes sorties FEC (105) qui ont été utilisées pour brouiller et coder ladite unité de données (102) dans l'A-MPDU (101).

2. Dispositif (100) selon la revendication 1, également configuré pour
modifier les sorties FEC (105) après codage de l'A-MPDU brouillé (101), particulièrement par perforation, et modifier les sorties FEC (105) après codage de l'au moins une unité de données (102) défaillante dans la partie retransmise (103) différemment de la modification des sorties FEC (105) après codage de l'A-MPDU brouillé (101), particulièrement par perforation différente.

3. Dispositif (100) selon la revendication 1 ou 2, dans lequel la partie retransmise (103) comporte l'au moins une unité de données (102) défaillante et des bits supplémentaires (301).

4. Dispositif (100) selon l'une quelconque des revendications précédentes, dans lequel
un bloc HARQ (400) comporte au moins une unité de données (102) et des bits de remplissage supplémentaires (401).

5. Dispositif (100) selon l'une quelconque des revendications précédentes, également configuré pour
conserver le germe de brouillage (104) et/ou les paramètres FEC qui ont été utilisés pour brouiller et coder les au moins deux unités de données (102) dans l'A-MPDU (101), et
utiliser le germe de brouillage (104) maintenu et/ou les paramètres FEC pour brouiller et coder l'au moins une unité de données (102) défaillante dans la partie retransmise (103).

6. Procédé (700) de demande de répétition automatique hybride, HARQ, le procédé (700) comprenant
la transmission (701) à un récepteur (110) d'une unité de données de protocole de contrôle d'accès au support agrégé, A-MPDU (101), selon les normes IEEE 802.11 et comportant au moins deux unités de données (102),
la transmission au récepteur (110), conjointement avec l'A-MPDU (101), d'informations de bloc HARQ concernant une division de l'A-MPDU (101) en une pluralité de blocs HARQ (400) déterminés, dans lequel chacun de la pluralité de blocs HARQ (400) dans l'A-MPDU (101) est brouillé indépendamment et chacun de la pluralité de blocs HARQ (400) brouillés est codé indépendamment en utilisant une correction d'erreur directe, FEC, et
la retransmission (702) au récepteur (110), si le décodage d'au moins une unité de données (102) a échoué au niveau du récepteur (110), d'au moins une partie de l'A-MPDU (101) comportant l'au moins une unité de données (102) défaillante,
dans lequel chaque bloc HARQ (400) comporte au moins une unité de données (102),
dans lequel la partie retransmise (103) contient chaque bloc HARQ (400) qui comporte une unité de données (102) défaillante, et
dans lequel l'au moins une unité de données (102) défaillante dans la partie retransmise (103) est brouillée et codée en effectuant un brouillage basé sur le même germe de brouillage (104) et en utilisant une FEC avec les mêmes sorties FEC (105) qui ont été utilisées pour brouiller et coder ladite unité de données (102) dans l'A-MPDU (101).
